# EUROPÄISCHE PATENTSCHRIFT

(11) **EP 2 186 718 B1**
(45) Veröffentlichungstag und Bekanntmachung des Hinweises auf die Patenterteilung: **24.10.2012**
(21) Anmeldenummer: 09014153.2
(22) Anmeldetag: 12.11.2009
(51) Int. Cl.: B62K 25/08, F16F 9/46

(54) **Federgabel für ein Fahrrad**
Suspension fork for a bicycle
Fourche à ressort pour un vélo

(30) Priorität: 13.11.2008 DE 102008057267
(43) Veröffentlichungstag der Anmeldung: 19.05.2010
(73) Patentinhaber: DT Swiss AG, 2500 Biel/ Bienne 6 (CH)
(72) Erfinder: Achenbach, Martin, 2503 Biel (CH); Wendel, Valentine, 2500 Biel (CH)
(74) Vertreter: Schütte, Hartmut

(56) Entgegenhaltungen:
- WO-A1-01/15964
- WO-A1-01/70563
- DE-U1- 29 810 431
- GB-A- 1 490 111
- GB-A- 2 415 027
- US-A- 5 022 501
- US-A1- 2003 001 358

## Beschreibung

Die vorliegende Erfindung betrifft eine Federgabel für ein Fahrrad.

Der Einsatz von Federgabeln an Fahrrädern ist grundsätzlich schon lange Zeit bekannt. Insbesondere als Teleskop-Federgabeln ausgeführte Federgabeln werden an Downhill- und Mountainbikes sowie an Cross-Country-Fahrrädern und zunehmend auch an Alltagsfahrrädern verbaut.

Federgabeln weisen meist zwei mit Bezug zum Rahmen des Fahrrads feststehende Rohre, die sogenannten Standrohre, und zwei untere bewegliche Rohre, die sogenannten Tauchrohre, auf, an denen die Nabe des Laufrades befestigt ist. Die Standrohre können durch eine Gabelbrücke oder Gabelkrone zusammengehalten werden, an denen in der Regel mittig das Gabelschaftrohr befestigt ist. Die Tauchrohre bzw. Gleitrohre weisen meist einen größeren Durchmesser auf, um die Standrohre in den Gleitrohren gleitverschieblich aufzunehmen.

Die Fahrer von mit Federgabeln ausgerüsteten Fahrrädern wünschen eine leichte und schnelle Einstellbarkeit der Feder- und Dämpfungseigenschaften der Federgabeln, um die aktuelle Charakteristik der Federgabel schnell an die jeweiligen Umgebungsbedingungen anpassen zu können.

Wenn der Fahrer einen steilen Berg oder eine starke Steigung hochfährt, ist es vorteilhaft, wenn die Federgabel einfedert, damit der Neigungswinkel des Fahrers bzw. des Fahrrads geringer wird. Dadurch kann der Fahrer den Gesamtschwerpunkt weiter nach vorne bringen, sodass das Empfinden bzw. die Gefahr des rückwärtigen Überschlags verringert wird.

Um ein Einfedern der Federgabel zu bewirken und ein anschließendes Ausfedern zu verhindern ist es bei bekannten Federgabeln möglich, ein Sperrventil zu Sperrung der Zugstufe zu aktivieren, sodass der Fluidweg in der Zugstufe versperrt wird. Anschließend ist nur noch ein Einfedern möglich, bis die Federgabel den maximalen Einfederungszustand erreicht hat. Durch die Sperrung der Zugstufe wird ein Ausfedern wirksam verhindert.

Mit einer solchen Aktivierung eines Sperrventils für die Zugstufe wird der Winkel des Fahrrads an einer starken Steigung wirksam verringert. Nachteilig ist jedoch, dass durch die vollständige Einfederung auch der Nachlauf und der Lenkungswinkel stark verändert werden.

Dokument US 2003/0001358A1 zeigt eine Federgabel, gemäß dem Oberbegriff des Anspruchs 1.

Vor dem Hintergrund des beschriebenen Standes der Technik ist es deshalb die Aufgabe der vorliegenden Erfindung, eine Federgabe zur Verfügung zu stellen, mit der ein definiertes Einfedern der Federgabel bei starken Steigungen ermöglicht wird.

Diese Aufgabe wird gelöst durch eine Federgabel mit den Merkmalen des Anspruchs 1. Bevorzugte Weiterbildungen sind Gegenstand der Unteransprüche. Weitere vorteilhafte Merkmale und Ausgestaltungen ergeben sich aus der Beschreibung des Ausführungsbeispiels.

Die erfindungsgemäße Federgabel ist für den Einsatz am Fahrrad vorgesehen und umfasst wenigstens ein Standrohr und wenigstens ein damit zusammenwirkendes Tauchrohr und einen Radaufnahmeraum daneben. Ein Dämpfungssystem mit einer durch einen beweglichen Kolben in eine erste Kammer und in eine zweite Kammer geteilte Dämpfungskammer ist vorgesehen. Weiterhin weist die Federgabel eine Drosseleinrichtung für die Zugstufe und wenigstens eine Drosseleinrichtung für die Druckstufe auf. Wenigstens ein Sperrventil ist zur wahlweisen Sperrung der Zugstufe vorgesehen. Die Dämpfungskammer weist wenigstens einen Verbindungskanal mit einer Strömungsdrossel auf, welche die zweite Kammer mit der ersten Kammer außerhalb des beweglichen Kolbens verbindet, wenn das Standrohr und das damit zusammenwirkende Tauchrohr um mehr als einen vorgegebenen Abstand eingefedert sind, um bei stärkerem Einfedern und aktiviertem Sperrventil der Zugstufe ein langsames Ausfedern bis zu einer durch den vorgegebenen Abstand definierten Dämpferstellung zu ermöglichen.

Die erfindungsgemäße Federgabel hat viele Vorteile. Ein erheblicher Vorteil der erfindungsgemäßen Federgabel ist, dass für Bergauffahrten und starke Steigungen und andere Anwendungsfälle ein definiertes Einfedern der Federgabel ermöglicht wird, ohne das die Federgabel vollständig einfedert. Durch den Verbindungskanal, der bei Überschreiten einer vorbestimmten Einfederung geöffnet wird, kann bei aktiviertem Sperrventil für die Zugstufe dennoch ein Fluidausgleich stattfinden.

Ein weiterer erheblicher Vorteil ist, dass durch die Strömungsdrossel in dem Verbindungskanal nur ein langsamer Fluidausgleich des Dämpfungsfluids möglich ist, sodass ein langsames Ausfedern erfolgt. Dadurch wird sicher gestellt, dass im normalen Betrieb der Verbindungskanal auch bei stärkerem Einfedern die Feder- und Dämpfungseigenschaften der Drosseleinrichtung für die Zugstufe nur in geringem Maße beeinflusst. Im normalen Betrieb merkt der Benutzer nicht, wenn ein Einfedervorgang über den vorgegebenen Abstand hinaus stattfindet. Eine Änderung der Feder- und Dämpfungscharakteristik tritt praktisch nicht auf. Deshalb ist die Strömungsdrossel entsprechend dimensioniert, sodass ein langsames Ausfedern erfolgt.

Ein erheblicher Vorteil der erfindungsgemäßen Federgabel ist, dass unabhängig von dem Gewicht des Fahrers auch bei gesperrter Zugstufe immer die gleiche Position der Federgabel eingestellt wird. Diese Position ist unabhängig von der einwirkenden Kraft, sondern wird nur durch die Position des Verbindungskanals definiert. Das ist sehr vorteilhaft, da dadurch für alle Fahrer die gleiche Position eingestellt wird, was insbesondere bei steilen Bergauffahrten sehr günstig ist.

Vorzugsweise ist der Strömungsquerschnitt der Strömungsdrossel des Verbindungskanals kleiner als der halbe maximale Strömungsquerschnitt der Drosseleinrichtung für die Druckstufe.

Besonders bevorzugt ist das Verhältnis des Strömungsquerschnitts der Strömungsdrossel zu dem maximalen Strömungsquerschnitt der Drosseleinrichtung für die Druckstufe kleiner als 1:5 und insbesondere kleiner als 1:10 und besonders bevorzugt kleiner als 1:20.

Besonders bevorzugt ist das Verhältnis der Strömungsquerschnitte der Strömungsdrossel zu dem maximalen Strömungsquerschnitt der Drosseleinrichtung kleiner als 1:10 oder 1:20 oder sogar 1:30.

Beträgt der maximale Strömungsdurchmesser der Drosseleinrichtung für die Druckstufe beispielsweise 3 oder 4 mm, so kann ein Durchmesser der Strömungsdrossel beispielsweise 0,5 mm oder 1 mm oder 1,5 mm betragen. So ergeben sich aufgrund der quadratischen Auswirkung auf die Fläche Verhältnisse zwischen etwa 1:64 und 1:10. Möglich sind auch größere und kleinere Verhältnisse.

Durch den erheblichen Unterschied der Strömungsquerschnitte der Strömungsdrossel des Verbindungskanals und des maximalen Strömungsquerschnitts der Drosseleinrichtung wird gewährleistet, dass auch bei einem über den vorgegebenen Abstand hinaus erfolgendem Einfedern eine praktisch nicht merkbare Veränderung des Dämpfungsverhaltens der Federgabel auftritt.

Vorzugsweise ist wenigstens eine Drosseleinrichtung als ein einstellbares Drosselventil und insbesondere als ein Low-Speed-Drosselventil ausgeführt. Dadurch kann die Dämpfungscharakteristik in der Zugstufe und in der Druckstufe entsprechend eingestellt werden.

Vorteilhafterweise ist für die Zugstufendämpfung und/oder Druckstufendämpfung ein festeingestelltes High-Speed-Drosselventil vorgesehen, um bei starken Schlägen oder Stößen den Querschnitt für das Dämpfungsfluid entsprechend zu vergrößern, sodass eine Art adäquate Dämpfung erfolgt.

In bevorzugten Weiterbildungen ist auch ein Sperrventil für die Druckstufe vorgesehen. Durch die gleichzeitige Aktivierung eines Sperrventils für die Druckstufe und eines Sperrventils für die Zugstufe wird die Federgabel praktisch starreingestellt.

Vorzugsweise weist der Verbindungskanal wenigstens eine Überströmöffnung, einen Kanal oder einen Ringspalt und eine Öffnung auf. Vorzugsweise ist der Verbindungskanal außerhalb der Dämpfungskammer vorgesehen. Dabei verbindet die Überströmöffnung die Dämpfungskammer mit dem Kanal oder Ringspalt. Ein Ringspalt als Kanal kann sich beispielsweise um die Dämpfungskammer herumerstrecken. Die Öffnung wiederum verbindet den Verbindungskanal mit der Dämpfungskammer an deren Ende, wo die erste Kammer angeordnet ist.

Wenn nun der bewegliche Kolben sich zwischen der Öffnung und der Überströmöffnung befindet, so verbindet der Verbindungskanal die erste Kammer mit der zweiten Kammer, sodass ein Fluidaustausch stattfinden kann.

Ein solcher Fluidaustausch findet nur langsam statt, da in dem Verbindungskanal eine Strömungsdrossel vorgesehen ist. Die Strömungsdrossel kann durch die eine oder durch mehrere Überströmöffnungen gebildet werden, kann aber auch am anderen Ende des Verbindungskanals an der Öffnung vorgesehen sein oder aber durch den Verbindungskanal selbst gebildet werden. Beispielsweise kann der Kanal einen entsprechend geringen Querschnitt aufweisen, sodass nur ein langsamer Dämpfungsfluidaustausch zwischen der ersten Kammer und der zweiten Kammer möglich ist, selbst wenn der Verbindungskanal die erste Kammer mit der zweiten Kammer verbindet.

Vorzugsweise wird der Kanal beziehungsweise der Ringspalt nach innen hin durch ein Innenrohr und nach außen hin durch ein Mittelrohr begrenzt. Das Mittelrohr ist dabei innerhalb des Standrohres angeordnet.

In bevorzugten Weiterbildungen ist der Verbindungskanal absperrbar. Beispielsweise kann ein Absperrventil vorgesehen sein, welches den Verbindungskanal von außen gesteuert absperrt.

Vorteilhafterweise ist das wenigstens eine Tauchrohr zu dem Standrohr hin in beliebige Einfederpositionen unterhalb der durch den vorgegebenen Abstand definierten Dämpferstellung feststellbar. Das kann beispielsweise erfolgen, indem sowohl das Sperrventil für die Zugstufe als auch das Sperrventil für die Druckstufe aktiviert werden. Sofern die Dämpferstellung derart ist, dass der vorgegebene Abstand des Einfederns nicht überschritten wird, wird ein einer solchen Stellung eine starre Federgabel zur Verfügung gestellt. Nur wenn die Einfederung den vorgegebenen Abstand überschreitet, kann über den Verbindungskanal ein Dämpfungsfluidaustausch erfolgen, sodass die Dämpfungsposition sich auf Dauer der definierten Dämpferstellung annähert.

In vorteilhaften Weiterbildungen beträgt der vorgegebene Abstand zwischen etwa 20 Prozent und 50 Prozent des maximalen Federwegs. Dadurch wird eine vorteilhafte Position der Federgabel erzielt, in der der Neigungswinkel des Fahrrads erheblich reduziert wird, was bei Bergauffahrten vorteilhaft sein kann.

In bevorzugten Weiterbildungen weist das Dämpfungssystem einen Steuerabschnitt an und insbesondere in einem Standrohr auf, wobei der Steuerabschnitt oberhalb der ersten Kammer und die erste Kammer oberhalb der zweiten Kammer angeordnet ist. Durch ein am oder in der Nähe des oberen Endes des Standrohres angeordnetes Dämpfungssystem wird ein einfacher Aufbau der erfindungsgemäßen Federgabel ermöglicht, da durch die Anordnung der Drosseleinrichtung und der Sperrventile an dem Steuerabschnitt eine einfache Zugänglichkeit zu den einzelnen Ventilen ermöglicht wird. Dadurch können an dem Steuerabschnitt alle Einstellelemente vorgesehen werden, die gegebenenfalls während der Fahrt von dem Fahrer bedient werden können.

Vorzugsweise ist ein gemeinsames Einstellteil vorgesehen, mit dem das Sperrventil der Zugstufe und das Sperrventil der Druckstufe einstellbar bzw. aktivierbar sind. Vorzugsweise ist das gemeinsame Einstellteil an dem Tauchrohr oder der Gabelkrone angeordnet und dort insbesondere verschwenkbar befestigt. Dadurch wird es dem Fahrer ermöglicht sich während der Fahrt nach vorn zu beugen und an dem Standrohr oder der Gabelkrone das gemeinsame Einstellteil zu betätigen, um die entsprechende Einstellung vorzunehmen.

Gegebenenfalls kann das gemeinsame Einstellteil auch fernbedienbar vorgesehen sein und mit elektrischem Bedienteil oder einem Hebel am Lenker oder dergleichen bedient werden.

In allen Ausgestaltungen ist es besonders bevorzugt, dass der bewegliche Kolben über eine Kolbenstange mit dem Tauchrohr verbunden ist, wobei an dem Tauchrohr insbesondere das Ausfallende zur Aufnahme eines Rades vorgesehen ist.

Das Tauchrohr oder die Tauchrohre und das Standrohr bzw. die Standrohre können aus einem Metall und insbesondere einem Leichtmetall bestehen. Möglich ist auch der Einsatz von Faserverbundwerkstoffen. In einer bestimmten Ausführungsform bestehen die Standrohre wenigstens teilweise aus Metall und die Tauchrohre bestehen wenigstens teilweise aus einem Faserverbundwerkstoff. Dadurch wird eine stabile und leichte Konstruktion ermöglicht.

In allen Ausgestaltungen ist die Federgabel vorzugsweise als Right-Side-Up-Bauform ausgeführt, bei der zwei an einer Gabelbrücke der Federgabel befestigte Standrohre vorgesehen sind, die in zwei entsprechende Tauchrohre mit größerem Durchmesser eintauchen. Möglich ist auch der Einsatz an anderen Federgabeln nach einem anderen Bauprinzip.

In allen Ausgestaltungen und Weiterbildungen sind die Tauchrohre vorzugsweise zum gleitenden Kontakt mit den Standrohren der Federgabel vorgesehen. Vorzugsweise werden die Standrohre mittels Gleitlagern in den Tauchrohren gelagert.

Vorzugsweise ist an dem unteren Ende wenigstens eines Tauchrohrs eine Radaufnahmevorrichtung oder ein Ausfallende angeordnet, welches insbesondere zur Aufnahme eines Laufrads vorgesehen ist.

Möglich ist auch der Einsatz mit nur einem Standrohr und einem Tauchrohr.

Weitere Vorteile und Anwendungsmöglichkeiten der vorliegenden Erfindung ergeben sich aus der Beschreibung von Ausführungsbeispielen, die nun mit Bezug auf die beiliegenden Figuren erläutert werden.

In den Figuren zeigen:
- Fig. 1: eine Vorderansicht einer erfindungsgemäßen Federgabel;
- Fig. 2: eine geschnittene Seitenansicht gemäß A-A der Federgabel aus Fig. 1;
- Fig. 3: eine geschnittene vergrößerte Seitenansicht der Federgabel in der Druckstufe;
- Fig. 4: eine geschnittene Seitenansicht der Federgabel in der Zugstufe;
- Fig. 5: den Steuerabschnitt des Dämpfungssystems der Federgabel nach Fig. 3 in der Druckstufe in vergrößerter Darstellung;
- Fig. 6: den Steuerabschnitt des Dämpfungssystems der Federgabel nach Fig. 4 in der Zugstufe in vergrößerter Darstellung;
- Fig. 7: den Steuerabschnitt des Dämpfungssystems der Federgabel nach Fig. 1 mit dem Einstellhebel in der ersten Umschaltstufe;
- Fig. 8: den Steuerabschnitt des Dämpfungssystems der Federgabel nach Fig. 1 mit dem Einstellhebel in der zweiten Umschaltstufe;
- Fig. 9: einen vergrößerten Querschnitt durch ein Standrohr im oberen Bereich;
- Fig. 10: einen vergrößerten Querschnitt durch ein Standrohr im Bereich der Überströmöffnung;
- Fig. 11: die Federgabel nach Fig. 1 bei gesperrter Zugstufe beim Einfedern;
- Fig. 12: die Federgabel aus Fig. 1 bei gesperrter Zugstufe nach starker Einfederung;
- Fig. 13: die Federgabel aus Fig. 1 bei gesperrter Zugstufe und anschließendem langsamen Ausfedern;
- Fig. 14: eine vergrößerte Darstellung eines Querschnitts des Steuerabschnitts einer weiteren Federgabel;
- Fig. 15: einen weiteren Querschnitt durch den Steuerabschnitt der Federgabel nach Fig. 14; und

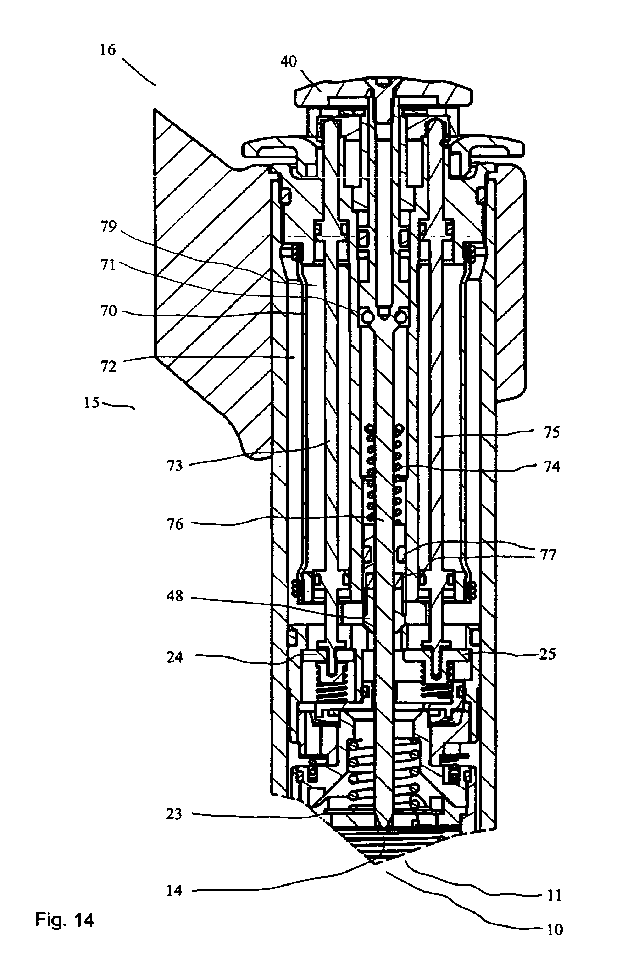

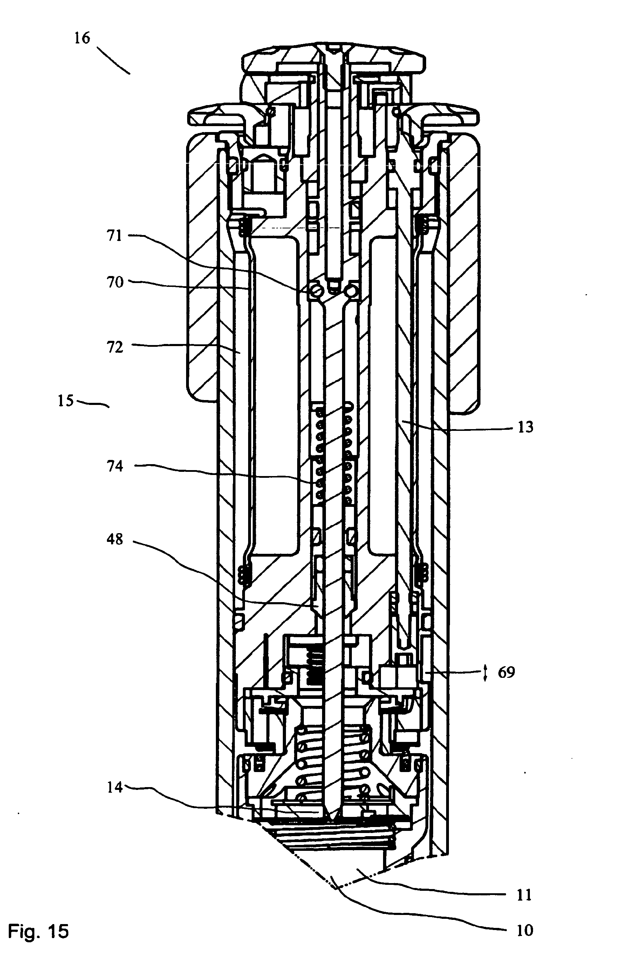

- Fig. 15: einen vergrößerten Querschnitt der Federgabel nach Fig. 14 mit dem beweglichen Kolben.

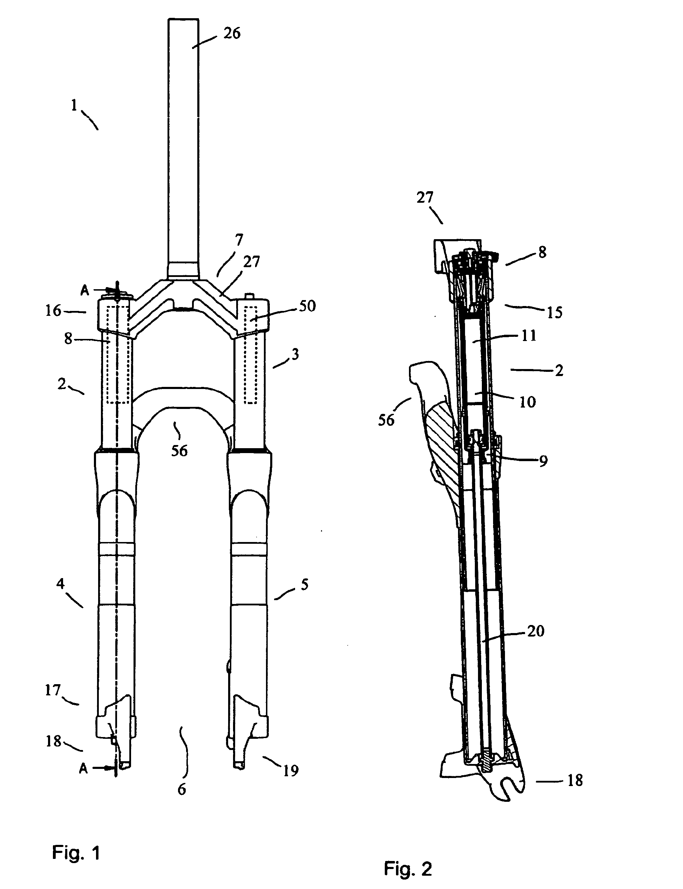

In den Fig. 1 bis 13 ist ein erstes Ausführungsbeispiel der erfindungsgemäßen Federgabel 1 in teilweise stark schematischen Ansichten dargestellt. Um die Übersichtlichkeit zu wahren und die Funktion besser erklären zu können, wurden einzelne Teile und Komponenten weggelassen.

Die in Fig. 1 in einer Vorderansicht dargestellte Federgabel 1 für ein hier nicht dargestelltes Fahrrad weist im oberen Bereich einen Gabelschaft 26 auf, der an ein als Gabelkrone 27 ausgeführtes Verbindungsteil 7 mittig angeschlossen ist, um die Gabel drehbeweglich an dem Rahmen des Fahrrads zu befestigen.

An den beiden Enden der Gabelkrone 27 sind Standrohre 2 und 3 an der Gabelkrone 27 befestigt. In dem Standrohr 2 ist ein Dämpfungssystem 8 angeordnet und in dem Standrohr 3 ist ein Federsystem 50 vorgesehen. Möglich ist es auch, in ein Standrohr 2 oder 3 das Dämpfungssystem 8 und auch das Federsystem 50 einzubauen. Mit dem Dämpfungssystem 8 und dem Federsystem 50 erhält die Federgabel 1 die gewünschten Feder- und Dämpfungseigenschaften.

Schiebbeweglich an den Standrohren 2 und 3 ist eine Tauchrohreinheit vorgesehen, die Tauchrohre 4 und 5 umfasst, die über wenigstens einen Verbindungsbügel 56 miteinander verbunden sind. Die Tauchrohreinheit kann aus mehreren Einzelteilen bestehen, kann aber auch einstückig gefertigt sein.

Zwischen den beiden Tauchrohren 4 und 5 bzw. zwischen den Standrohren 2 und 3 ist der Radaufnahmeraum 6 vorgesehen. Ein hier nicht dargestelltes Rad kann an den Ausfallenden 18 und 19 der Tauchrohre 4 und 5 am unteren Ende 17 der Federgabel 1 befestigt werden.

Am oberen Ende 16 ist in das Standrohr 2 ein Dämpfungssystem 8 integriert, wie insbesondere Fig. 2 entnommen werden kann.

Das Dämpfungssystem 8 umfasst eine Dämpfungskammer 10, die durch einen beweglichen Kolben 9 in eine obere erste Kammer 11 und eine untere zweite Kammer 12 geteilt wird. Oberhalb der Dämpfungskammer 10 ist ein Steuerabschnitt 15 vorgesehen, der gleichzeitig den oberen Abschluss der Dämpfungskammer 10 bildet. Der bewegliche Kolben 9 ist hier als geschlossener Pumpkolben ausgebildet. Ein Durchfluss durch den beweglichen Kolben 9 ist im Regelfall nicht möglich. Wenn der Kolben bewegt wird, muss von der oberen oder ersten Dämpferkammer 11 ein äußerer Rückfluss zur unteren oder zweiten Dämpferkammer 12 erfolgen.

Die Dämpfungskammer 10 mit der ersten Kammer 11 und der zweiten Kammer 12 ist als Hochdruckkammer 29 ausgebildet, während in dem Steuerabschnitt 15 eine Niederdruckkammer 32 vorgesehen ist.

In dem Steuerabschnitt 15 sind eine Drosseleinrichtung 57 für die Zugstufendämpfung und eine Drosseleinrichtung 58 für die Druckstufendämpfung vorgesehen. Hier ist die Drosseleinrichtung 57 als einstellbares Drosselventil 13 zur Einstellung der Zugstufendämpfung und die Drosseleinrichtung 58 als einstellbares Drosselventil 14 zur Einstellung der Druckstufendämpfung vorgesehen. Weiterhin sind ein Sperrventil 24 für die Zugstufe, ein Sperrventil 25 für die Druckstufe und High-Speed-Drosselventile 22, 23 für die Zugstufe und die Druckstufe sowie ein Blowoff-Ventil 48 vorgesehen.

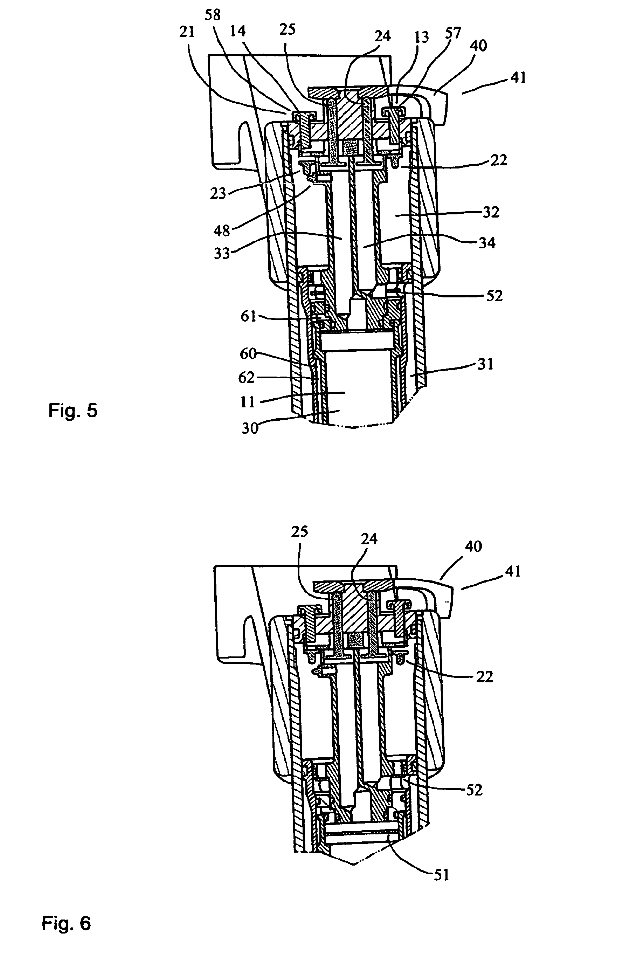

An dem oberen Ende der ersten Kammer 11 der Dämpfungskammer ist ein Rückschlagventil 51 angeordnet, welches durch eine nicht näher dargestellte Feder in die geschlossene Stellung vorbelastet ist, in der das Rückschlagventil 51 die direkte Strömungsverbindung zur Niederdruckkammer 32 verschließt. Das Rückschlagventil 51 öffnet, wenn in der Zugstufe die erste Kammer einen relativen Unterdruck aufweist (vgl. Fig. 6).

Ein Rückschlagventil 52 ist vorgesehen, welches durch eine ebenfalls nicht näher dargestellte Feder in die geschlossene Stellung vorbelastet ist. Das Rückschlagventil 52 wird geöffnet, wenn in der Druckstufe die zweite Kammer 12 einen relativen Unterdruck aufweist (vgl. Fig. 5) und das Dämpfungsfluid aus der Niederdruckkammer 32 über den Rückkanal 35 und die Außenkammer 31 in die zweite Kammer 12 gesaugt wird.

In der Zugstufe wird das aus dem Rückkanal 35 der Steigleitung 34 zugeführte Dämpfungsmedium durch das Drosselventil 13 in die Niederdruckkammer 32 eingeleitet. Im Druckstufenfall wird das aus der ersten Kammer 11 in den Steigkanal 33 eingeleitete Dämpfungsmedium über das Drosselventil 14 in die Niederdruckkammer 32 eingeleitet. Dabei tritt das Dämpfungsfluid in der Druckstufe von der ersten Kammer 11, die Teil der Innenkammer 30 ist, über die Steigleitung 33 in den Steuerabschnitt 15 ein. Je nach Stellung des Drosselventils 14 zur Einstellung der Druckstufendämpfung und nach auftretender Belastung wird das Dämpfungsfluid durch das Drosselventil 14 und/oder durch das High-Speed-Drosselventil 23 in die Niederdruckkammer 32 eingeleitet.

Im Zugstufenfall tritt das Dämpfungsfluid aus der zweiten Kammer 12 im unteren Bereich des Dämpfungssystems 8 in die als Hochdruckkammer ausgeführte Außenkammer 31 ein, die im unteren Bereich 36 der zweiten Kammer 12 durch die Außenwandung des Standrohres 2 und durch ein Zwischenrohr 37 begrenzt wird, welches das Standrohr 2 im unteren Bereich 36 der zweiten Kammer 12 radial umgibt. Dadurch wird eine thermische Isolierung zu dem Tauchrohr 4 bewirkt, welches im unteren Bereich 36 der zweiten Kammer 12 das Standrohr 2 umgibt, sodass eine Erwärmung des Tauchrohres 4 im unteren Bereich weitgehend vermieden wird.

Je nach auftretenden Belastungen gleitet der bewegliche Kolben 9 innerhalb der Dämpfungskammer 10 nach oben und unten, wobei eine Abdichtung radial nach außen zu der Innenkammer 30 über eine Dichtung 49 erfolgt.

Die Drosselventile 13 und 14 sind hier im Ausführungsbeispiel über Einstellelemente 21 verstellbar angeordnet. Die Einstellelemente 21 können hier als Schraubköpfe 28 ausgebildet sein, wobei durch Drehung des Einstellelementes 21 das Drosselventil 13 bzw. 14 weiter in die obere Abschlusswandung des Steuerabschnitts 15 eingeführt wird. Dadurch werden Schlitze oder radiale Bohrungen 54 bzw. 55 entsprechend weiter geöffnet oder weiter geschlossen, über die das Dämpfungsöl in der Druckstufe bzw. Zugstufe geleitet wird. Damit ist über eine Drehbewegung der Einstellelemente 21 der Drosselventile 13 bzw. 14 eine effektive Einstellung der Dämpfungswirkung der Zugstufe und der Druckstufe jeweils getrennt voneinander möglich. Diese Einstellung der Dämpfungswirkung erfolgt insbesondere für den normalen Betrieb, in dem die Federgabel auf die Dämpfung von kleineren bis mittleren oder auch größeren Stößen eingestellt ist.

Um eine Dämpfung auch bei besonders starken Stößen zu gewährleisten, sind die High-Speed-Drosselventile 22 und 23 für die Zugstufe bzw. die Druckstufe vorgesehen. Die High-Speed-Drosselventile 22 und 23 sind im Normalfall nicht einstellbar vorgesehen, obwohl auch das möglich ist.

Hier im Ausführungsbeispiel sind Vorbelastungseinrichtungen vorgesehen, die beispielsweise als Spiralfedern ausgebildet sind, um die jeweiligen High-Speed-Drosselventile 22 und 23 in die geschlossene Stellung vorzubelasten. Wenn nun besonders starke Stöße auftreten, steigt der Druck in der Dämpfungskammer entsprechend an, sodass die Kraft der jeweiligen Vorbelastungseinrichtung überwunden wird und das jeweilige High-Speed-Drosselventil 22 bzw. 23 öffnet. Das führt dazu, dass bei entsprechend starken Belastungen die Ventile öffnen.

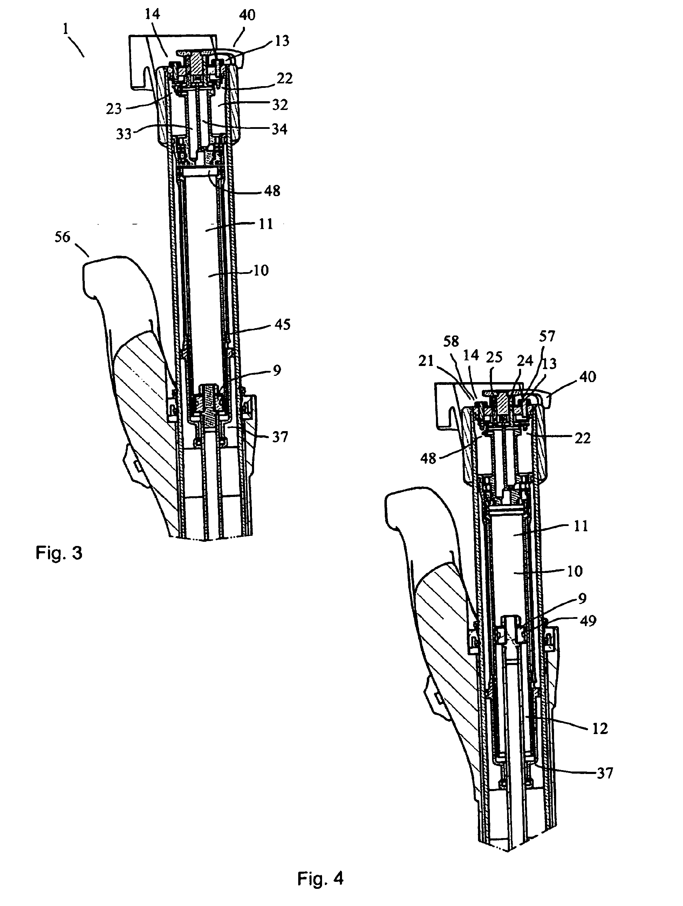

In Fig. 3 ist das Einfedern in der Druckstufe dargestellt, wobei Fig. 5 die Stellung der einzelnen Ventile in vergrößerter Darstellung zeigt. In Fig. 4 ist hingegen das Ausfedern in der Zugstufe dargestellt, wobei Fig. 6 die Stellung der Ventile vergrößert darstellt.

Deutlich erkennbar ist in den Fig. 3 bis 6, dass die Sperrventile 24 und 25 jeweils geöffnet sind, während die Drosselventile 13 und 14 je nach Betriebszustand geöffnet oder geschlossen dargestellt sind.

Wie insbesondere der Darstellung gemäß Fig. 3 entnommen werden kann, befindet sich im Abstand 46 vom unteren Ende der Dämpfungskammer 10 eine Überstromöffnung 45, welche ein Austreten des Dämpfungsfluids aus der zweiten Kammer 12 auch dann erlaubt, wenn das Sperrventil 24 für die Zugstufe geschlossen ist, bis der Kolben 9 die Überströmöffnung 45 hier von oben kommend verschließt.

Die Sperrventile 24 und 25 für die Zugstufe und die Druckstufe dienen dazu eine Dämpfung in der Zugstufe bzw. in der Druckstufe wahlweise zu unterbinden. Eine Dämpfung kann durch Aktivierung eines der Ventile unterbunden werden, wodurch der Durchflusskanal für die Zugstufe oder die Druckstufe entsprechend verschlossen wird.

Ein erheblicher Vorteil der dargestellten Ausführungsform ist, dass ein gemeinsamer Einstellhebel 40 als Einstellelement 21 vorgesehen ist, mit dem das Sperrventil 24 der Zugstufe und auch das Sperrventil 25 der Druckstufe gezielt und wahlweise gemeinsam aktivierbar sind.

Dazu ist der Einstellhebel 40 verschwenkbar an dem oberen Ende 16 des Steuerabschnitts 15 angeordnet, sodass der Einstellhebel 40 hier über das obere Ende des Standrohres 2 hinaussteht und von dem Fahrer als Bedienperson während der Fahrt bedienbar ist. Dazu muss der Fahrer nur mit einer Hand zu der Gabelkrone 17 der Gabel 1 hinuntergreifen und kann durch eine Drehbewegung des Einstellhebels 40 zwischen hier drei oder sogar bis zu vier vorgesehenen Umschaltstufen umschalten. In einer bevorzugten Ausgestaltung kann der Einstellhebel 40 als ferngesteuertes Einstellelement ausgebildet sein, welches z. B. über einen Steuermechanismus am Lenker betätigt wird.

In einer ersten Einstellung 41 des Einstellhebels 40 wird die in Fig. 5 dargestellte Situation erzielt, in der sowohl das Sperrventil 24 der Zugstufe als auch das Sperrventil 25 der Druckstufe nicht aktiviert sind, sodass ein freier Durchfluss durch die Ventile 24 und 25 möglich ist. Dies ist der normale Betriebszustand der Federgabel 1, in der sowohl eine Zugstufendämpfung als auch eine Druckstufendämpfung und eine Einfederung und eine Ausfederung möglich ist.

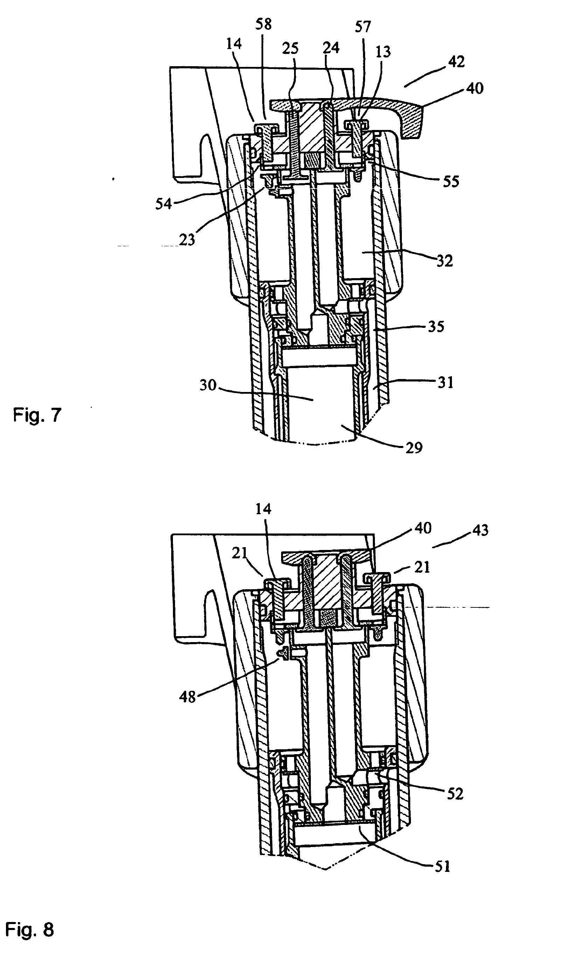

Durch eine Drehbewegung des Einstellhebels 40 von der Position 41 in die zweite Drehposition 42, die in Fig. 7 dargestellt ist, wird das Sperrventil 24 der Zugstufe aktiviert und somit verschlossen, sodass in der Zugstufe im Wesentlichen kein Durchfluss mehr möglich ist. In der Druckstufe ist das Sperrventil 25 immer noch geöffnet. Das bedeutet, dass ein Einfedern noch möglich ist, während ein anschließendes Ausfedern unterbunden wird. Eine solche Drehposition 42 des Einstellhebels 40 ist beispielsweise sinnvoll, wenn der Fahrer eine starke Steigung hochfährt und den Neigungswinkel des Fahrrads verringern möchte. Durch das Einfedern der Vorderradgabel verringert sich dessen effektive Höhe, sodass eine sichere und angenehmere Fahrposition erreicht wird. Nach Aktivieren der Schwenkposition 42 durch das Drehen des Einstellhebels 40 bewirkt jeder Schlag und jede Einfederung ein Absenken der Vorderradgabel 1, bis eine vorgesehene Einstellung erreicht wird.

Durch Weiterdrehen des Einstellhebels 40 in die in Fig. 8 dargestellte dritte Umschaltposition 43 wird erreicht, dass nicht nur das Sperrventil 24 für die Zugstufe, sondern auch das Sperrventil 25 für die Druckstufe geschlossen wird. Eine solche Einstellung des Einstellhebels 40 ist zu jedem Zeitpunkt möglich. Dadurch wird direkt ein Ausfedern und auch ein Einfedern der Gabel verhindert. Die Federgabel 1 verhält sich praktisch so, als wenn kein Feder- und Dämpfungssystem vorhanden wäre. Nur bei besonders großen Stößen kann das Blowoff-Ventil 48 aktiviert werden und einen Durchfluss erlauben, um den maximalen im System auftretenden Druck zu begrenzen und einen Defekt oder ein Zerbersten des Dämpfungssystems 10 der Federgabel zu verhindern, wenn beispielsweise mit dem Fahrrad ein Sprung durchgeführt wird, während sich der Einstellhebel in der dritten Umschaltstufe 43 befindet.

Weiter kann es möglich sein, den Einstellhebel 40 in eine vierte Umschaltstufe 44 zu überführen, in der das Sperrventil für die Druckstufe geschlossen ist, während das Sperrventil 24 für die Zugstufe geöffnet ist. Dadurch wird ein Ausfedern der Feder ermöglicht, während ein Einfedern verhindert wird.

Die Federgabel 1 weist weiterhin das schon erwähnte Überströmventil 45 auf, welches in einem Abstand 46 vom unteren Ende der zweiten Kammer 12 vorgesehen ist. Durch die Überströmöffnung 45 wird bei aktiviertem Sperrventil 24 der Zugstufe ein vollständiges Einfedern der Federgabel 1 verhindert.

Es ist ein Verbindungskanal 60 vorgesehen, der über wenigstens eine Strömungsdrossel 63 verfügt. Der Verbindungskanal 60 dient dazu, die Federgabel bei aktiviertem Sperrventil 24 der Zugstufe nach starken Einfedervorgängen langsam automatisch wieder bis auf ein bestimmtes Maß ausfedern zu lassen.

Dazu stellt der Verbindungskanal 60 eine Strömungsverbindung für das Dämpfungsfluid zwischen der zweiten Kammer 12 und der ersten Kammer 11 zur Verfügung, wenn das Standrohr 2 und das damit zusammenwirkende Tauchrohr 4 um mehr als einen vorgegebenen Abstand 46 eingefedert sind. Dadurch wird bei stärkerem Einfedern und aktiviertem Sperrventil 24 der Zugstufe ein langsames Ausfedern bis zu einer durch den vorgegebenen Abstand 46 definierten Dämpferstellung 68 ermöglicht.

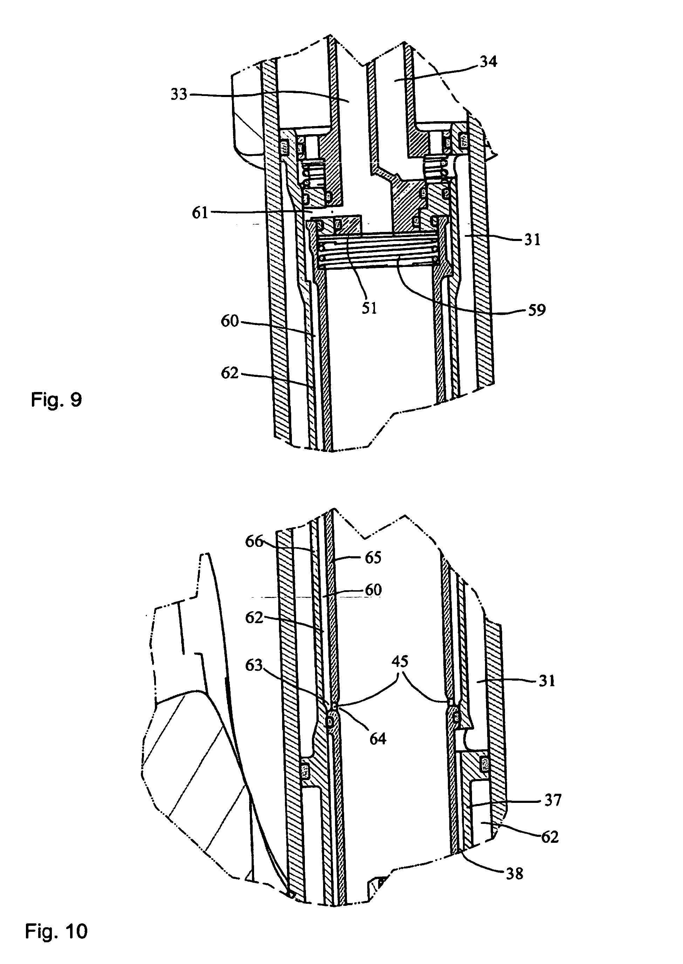

Die Ausgestaltung des Überströmventils oder der Überströmöffnung 45 ist vergrößert in den Figuren 9 und 10 dargestellt. Zwischen etwa 20 und 50 % des Einfederwegs ist wenigstens eine Überströmöffnung 45 an der Dämpfungskammer 10 vorgesehen. Die Überströmöffnung 45 weist den Abstand 46 von unten auf, während der maximale Hub der Länge 47 entspricht. Die wenigstens eine Überströmöffnung 45 ist hier über den als Ringkanal 62 ausgebildeten Kanal mit der Öffnung 61 verbunden, die hier in die Steigleitung 33 mündet. Dadurch kann Dämpfungsfluid aus der Kammer 12 direkt in die Steigleitung 33 und somit wieder in die Kammer 11 eintreten. Das Dämpfungsfluid kann aus der Kammer 12 über die Überströmöffnung 45 in den Kanal 60 und weiter über die Öffnung 61 in die Steigleitung 33 und von da in die erste Kammer 11 übertreten, sodass die Federgabel wieder ausfedert, bis der Kolben die Überströmöffnung 45 wieder verschließt.

Die Strömungsdrossel 63 wird hier insbesondere durch die Überströmöffnung 45 oder durch die Überströmöffnungen 45 gebildet, wenn mehrere vorhanden sind. Der Strömungsquerschnitt 64 der Strömungsdrossel 63 wird durch die freie Durchgangsfläche der Überströmöffnung 45 (oder durch die Summe der einzelnen Flächen der Überströmöffnungen 45) gebildet. Hier ist der Strömungsquerschnitt 64 jedenfalls erheblich kleiner als der halbe maximale Strömungsquerschnitt der Drosseleinrichtung 58 bzw. des Drosselventils 14 für die Druckstufe.

Das Verhältnis des Strömungsquerschnitts 64 der Strömungsdrossel 63 zu dem maximalen Strömungsquerschnitt der Drosseleinrichtung 58 für die Druckstufe ist insbesondere kleiner als 1:3 und vorzugsweise kleiner als 1:5 und besonders bevorzugt kleiner als 1:8. Werte von 1:10 oder 1:20 und insbesondere auch 1:30 sind möglich und bevorzugt. Die Fläche ist insbesondere so bemessen, dass der Verbindungskanal 60 in geöffnetem Zustand das Dämpfungsverhalten der Federgabel nur gering beeinflusst.

Das Gleiche gilt vorzugsweise auch für das Verhältnis des Strömungsquerschnitts 64 der Strömungsdrossel 63 zu dem maximalen Strömungsquerschnitt der Drosseleinrichtung 50 für die Zugstufe.

Der Ringspalt 62 wird durch ein Innenrohr 65 und ein Mittelrohr 66 begrenzt, welche beide konzentrisch innerhalb des Standrohres angeordnet sind.

In anderen Ausgestaltungen kann der Verbindungskanal über z. B. ein steuerbares Ventil absperrbar sein.

In anderen Ausgestaltungen kann der Kanal 60 über eine Öffnung 61 auch direkt in die Niederdruckkammer 32 münden (Variante nicht abgebildet). So kann eine Federgabel auf unterschiedliche Betriebsweisen eingestellt werden. Die Federgabel kann komplett starr eingestellt werden. Die Federgabel kann z. B. für Bergfahrten auch um einen bestimmten Anteil eingefedert werden.

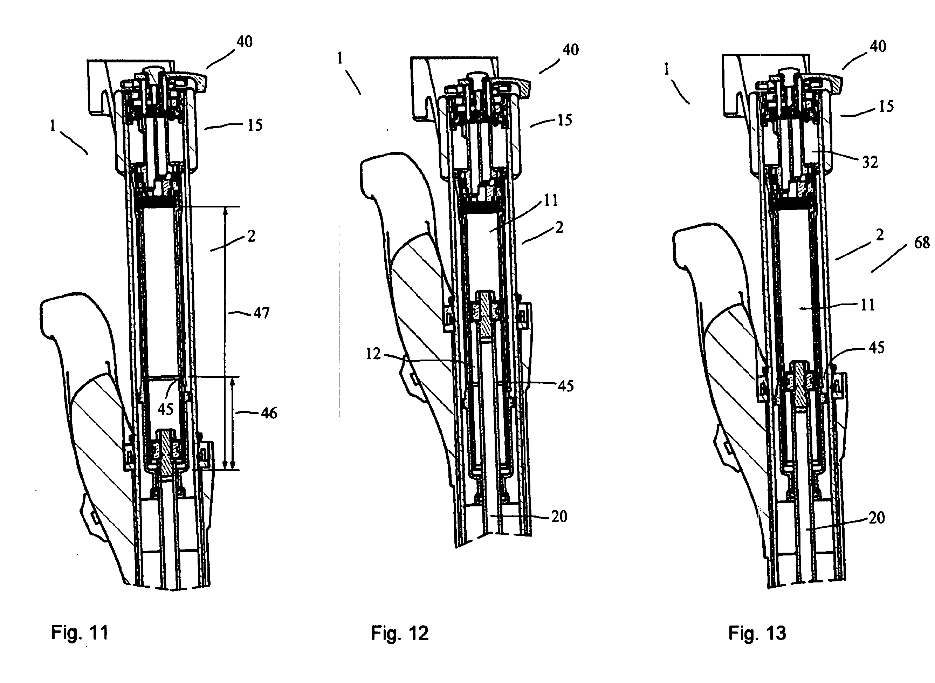

Die Funktions- und Wirkungsweise des Überströmventils 45 wird nun mit Bezug auf die Fig. 11 bis 13 erläutert.

Dabei befindet sich in der Darstellung gemäß Fig. 11 die Federgabel 1 im ausgefederten Zustand, wobei das Sperrventil 24 der Zugstufe aktiviert ist, um ein Einfedern der Federgabel 1 zu ermöglichen, während ein Ausfedern im Wesentlichen verhindert wird.

Nach Aktivierung des Sperrventils 24 durch Überführen des Einstellhebels 40 in die zweite Umschaltstufe 42 wird die Steigleitung 34 für die Zugstufe verschlossen. Die während der Fahrt auftretenden Stöße bewirken ein Absenken der Federgabel 1, bis die Federgabel beispielsweise die in Fig. 13 dargestellte Stellung erreicht hat, in der der Kolben 9 bis zu der Überströmöffnung 45 eingefedert ist.

Wenn nun in dieser Stellung ein weiterer starker Stoß auf die Federgabel 1 einwirkt, wird die Federgabel weiter über die Überströmöffnung 45 hinaus einfedern (vgl. Fig. 12). Dadurch wird die Überströmöffnung 45 frei gegeben, sodass die sperrende Wirkung des Sperrventils 24 umgangen wird. Der Verbindungskanal 60 verbindet die zweite Kammer 12 mit der ersten Kammer 11 und die Federgabel wird automatisch langsam abgesenkt. Der Austausch des Dämpfungsfluids erfolgt langsam, da der Strömungsquerschnitt 64 der als Strömungsdrossel 63 dienenden Überströmöffnung 45 klein ist.

Durch die Überströmöffnung 45 bedingt kann die Federgabel 1 wieder ausfedern, bis sich der in Fig. 13 dargestellte Zustand ergibt, in der die Überströmöffnung 45 wieder verschlossen wird.

Insgesamt wird durch die Überströmöffnung 45 trotz aktiviertem Sperrventil 24 ein System zur Verfügung gestellt, welches den Federweg auch bei aktiviertem Sperrventil 24 der Zugstufe begrenzt. Durch die Anordnung der Überströmöffnung 45 kann der gewünschte Federweg eingestellt werden.

Damit wird eine Funktion zur Verfügung gestellt, die bei Bergauffahrten das nötige Einfedern zur Verfügung stellt, während andererseits weiterhin eine geringe Dämpfungsfunktion zur Verfügung stellt.

Wenn mehrere einstellbare oder schaltbare Überströmöffnungen 45 in unterschiedlichen Höhen vorgesehen werden, kann der bei aktiviertem Sperrventil 24 noch zur Verfügung stehende Federweg entsprechend eingestellt werden.

Die Figuren 14 bis 16 zeigen Querschnitte durch eine weitere Ausführungsform einer erfindungsgemäßen Federgabel 1. Gleiche oder ähnliche Bauteile werden mit den gleichen Bezugszeichen versehen. Das Dämpfungssystem 8 ist wiederum in ein Standrohr 2 oder 3 einer Federgabel 1 eingesetzt, so wie es in Fig. 1 gezeigt ist.

Im Unterschied zum vorangegangenen Ausführungsbeispiel ist in dem Ausführungsbeispiel nach den Figuren 14 bis 16 das Drosselventil 13 als Lowspeed-Drosselventil für die Zugstufe am oberen Ende der Dämpfungskammer 10 vorgesehen. Auch das Drosselventil 14 als Lowspeed-Drosselventil für die Druckstufe ist am oberen Ende der Dämpfungskammer 10 angeordnet. Die Ventile trennen den Hochdruckbereich von dem Niederdruckbereich. Der Steuerabschnitt 15 erstreckt sich praktisch von dem oberen Ende der ersten Kammer 11 bis zum oberen Ende 16 des Standrohrs 2.

Die Drosselventile 13 (Lowspeed) für die Zugstufe und 14 (Lowspeed) für die Druckstufe sind über entsprechende Steuerelemente bzw. Steuerstifte mit dem oberen Ende 16 verbunden und können durch Betätigung des Einstellteils 40 eingestellt werden.

In Fig. 14 ist erkennbar, dass der Steuerstift 73 auf das Sperrventil 24 für die Zugstufe einwirkt, sodass bei Bedarf der Lockout aktiviert werden und die Zugstufendämpfung blockiert werden kann. Ein Steuerstift 75 wirkt auf das Sperrventil 25 für die Druckstufe ein und kann wahlweise die Druckstufendämpfung blockieren. Bei besonders starken Stößen öffnet das Blowoff-Ventil 48, wenn die Stöße eine Kraft erzeugen, die die Spannkraft der Feder 74 des Blowoff-Ventils 48 übersteigt.

Das das Blowoff-Ventil 48 ist über Dichtungen 77 jeweils gegenüber dem Steuerstift 76 und der äußeren Wandung abgedichtet ist.

Das High-Speed-Drosselventil 23 ist hier parallel zu dem Low-Speed-Drosselventil 14 geschaltet.

Oberhalb der Sperrventil 24 und 25 wird der Ölausgleichsraum 72 über eine Trennwandung von einem Gasvolumen 79 getrennt. Die Trennwandung ist hier als Gummischlauch 70 ausgeführt und stellt eine zuverlässige Trennung des Öls von dem Gasvolumen sicher. Das Gasvolumen 79 steht unter einem Überdruck, der typischerweise zwischen 1 und 5 bar beträgt. Der bewegliche Kolben 9 ist hier als undurchlässiger Pumpkolben ausgeführt. Wenn der bewegliche Kolben 9 eintaucht, wird das dem Öl zur Verfügung stehende Volumen reduziert. Dadurch wird das Gasvolumen 79 durch den flexiblen Gummischlauch 70 entsprechend komprimiert und der Ausgleichsraum 72 entsprechend vergrößert.

Der O-Ring 71 deckt eine Bohrung ab. Der O-Ring 71 dient zusammen mit der Bohrung als Einwegventil und dient zum Befüllen mit Gas nach der Montage der Federgabel. Das Einwegventil öffnet, wenn der Innendruck den O-Ring soweit aufdehnt, bis Gas durch den entstehenden Spalt austreten kann.

In Fig. 15 ist ein weiterer Querschnitt durch den Steuerabschnitt 15 gezeigt, wobei Fig. 15 einen etwa quer zu dem Querschnitt nach Fig. 14 angeordneten Querschnitt zeigt.

Erkennbar ist das Drosselventil 13 als Low-Speed-Regelventil für die Zugstufe. Über eine Längsverstellung wird der Regelspalt 69 reguliert und somit der Durchflusswiderstand eingestellt.

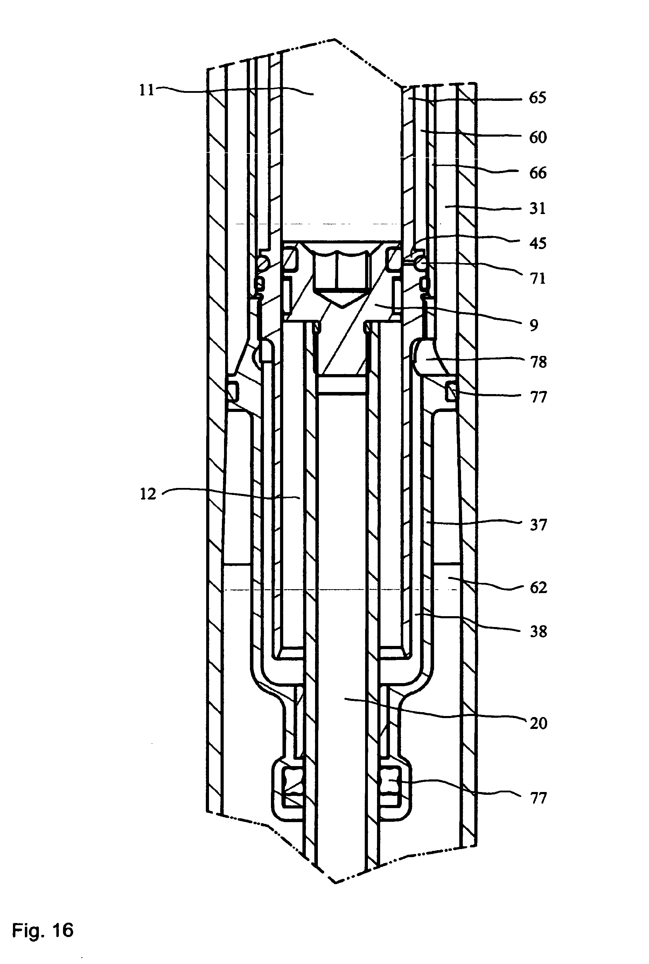

Fig. 16 zeigt einen Querschnitt durch den Bereich des Kolbens im untere Bereich der Dämpfungskammer, dort wo wie im vorausgegangenen Ausführungsbeispiel die Überströmöffnung 45 vorgesehen ist.

Die Kolbenstange 20 ist über eine Dichtung 77 gegenüber der Dämpferkammer 10 abgedichtet. Am oberen Ende der Kolbenstange 20 ist der bewegliche Kolben 9, der als Pumpkolben ausgeführt ist, und der die erste Kammer 11 von der zweiten Kammer 12 trennt.

Die zweite Kammer 12 geht unten in den damit verbundenen Zwischenraum 38 über. Nach außen wird die zweite Kammer 12 bzw. der Niederdruckbereich dort durch das Zwischenrohr 37 begrenzt, welches mit einer Dichtung 77 nach außen zu dem Standrohr abgedichtet ist. Der Zwischenraum 38 ist am oberen Ende radial nach außen über mindestens eine Öffnung 78 mit der Außenkammer 31 verbunden. Die zweite Kammer 12 bildet mit dem Zwischenraum 38 und der Außenkammer zusammen die Zugstufenkammer.

Radial innerhalb der Außenkammer 31 ist das Mittelrohr 66 vorgesehen, in welchem hier konzentrisch das Innenrohr 65 angeordnet ist. Zwischen dem Innenrohr 65 und dem Mittelrohr 66 ist ein Kanal 60 vorgesehen. Von dem Kanal 60 mündet eine Öffnung 61 im oberen Bereich in die erste Kammer 11 und eine Öffnung 45 im unteren Bereich in die Dämpfungskammer 10. Dadurch kann der Kanal 60 einen Bypass zwischen der ersten Kammer 11 und der zweiten Kammer 12 darstellen, wenn sich der bewegliche Kolben 9 zwischen der den Öffnungen 45 und 61 befindet. Dadurch kann auch bei blockierter Dämpfung ein Austausch stattfinden. Der Austausch ist langsam, da die Strömungsquerschnitte der Öffnungen bewusst klein gewählt wurden.

Um die Durchflussmengen durch die Überströmöffnungen 45 und 61 noch weiter zu reduzieren, können über den Überströmöffnungen 45 und 61 O-Ringe 71 vorgesehen sein. Dadurch wird erreicht, dass erst ein bestimmter Druck überwunden werden muss, was den Durchfluss weiter bremst und somit die normale Funktion möglichst wenig einschränkt. Es hat sich nämlich gezeigt, dass die Überströmöffnungen 45 und 61 sehr klein sein sollten. Und auch bei kleinen Öffnungen ist es sinnvoll, den Durchfluss noch weiter zu reduzieren.

Ein erheblicher Vorteil der Überstromöffnungen 45 und 61 und es dadurch bereitgestellten Bypasses ist auch, dass unabhängig von dem Gewicht des Fahrers auch bei gesperrter Zugstufe immer die gleiche Position eingestellt wird. Diese Position ist unabhängig von der einwirkenden Kraft, sondern wird durch die Position der Bohrung definiert. Das ist sehr vorteilhaft, da dadurch für alle Fahrer die gleiche Position eingestellt wird, was insbesondere bei steilen Bergauffahrten sehr günstig ist.

Es folgt eine kurze Beschreibung der Funktion: In der Druckstufe, d.h. beim Einfedern und bei geöffneten Sperrventilen 24 und 25.

Als Folge eines Stoßes fährt der als Pumpkolben ausgeführte bewegliche Kolben 9 nach oben und der Druck in der ersten Kammer 11 oberhalb des Kolbens 9 steigt an. Das Öl wird dann über das Drosselventil 14 (Druckstufenventil Low-speed) nach oben fließen.

Das Drosselventil 23 ist durch eine Feder vorbelastet, sodass bei geringen Belastungen ein Shim das Drosselventil 23 abdichtet. Ab einer bestimmten Belastung bzw. einem entsprechenden Überdruck öffnet zusätzlich das High-Speed-Drosselventil 23 der Druckstufe, so dass die Drosselventile 14 und 23 parallel geöffnet sind. Das Öl fließt nach oben in den Ölausgleichsraum 72 am oberen Ende des Standrohres. Der als Ringkammer ausgebildete Ölausgleichsraum 72 ist zwischen der Standrohrwandung und dem flexiblen Gummischlauch 70 gebildet. Der Gummischlauch 70 wird durch das in den Ölausgleichsraum 72 einfließende Öl komprimiert. Im Inneren des Gummischlauches 70 ist ein Gasvolumen 79 vorhanden. Das Gasvolumen 79 ist hier mit Luft gefüllt und im vorliegendem Fall unter einen Druck von z.B. 3-4 Bar gesetzt. Dadurch wird zuverlässig Kavitation in dem strömenden Öl vermieden. Durch den Gummischlauch und das Gasvolumen wird das Volumen der Kolbenstange ausgeglichen. Und auch bei Wärmeausdehnung des Öls steht ein entsprechendes Reservoir zur Verfügung.

Beim Einfedern sinkt gleichzeitig in der zweiten Kammer 12 unterhalb des beweglichen Kolbens 9 der Druck. Die zweite Kammer steht unten in Strömungsverbindung mit dem Zwischenraum 38 und der Außenkammer 31, von wo nun Öl angesaugt wird. Die Außenkammer 31 grenzt an den Steuerabschnitt 15. Dort öffnet ein Rücklaufventil und Öl fließt von oben aus dem Ölausgleichsraum 72 ab.

Beim Ausfedern in der Zugstufe fährt der bewegliche Kolben 9 nach unten und es bildet sich in der unteren zweiten Kammer 12 und somit auch in der Außenkammer 31 ein Überdruck, während in der ersten Kammer 11 oberhalb des Kolbens 9 ein Unterdruck entsteht. Durch der Unterdruck in der ersten Kammer 11 öffnet wenigstens ein am oberen Ende angeordnetes Rückschlagventil und es wird Öl von oben aus dem Ölausgleichraum 72 angesaugt.

Insgesamt stellt die erfindungsgemäße Federgabel 1 ein System bereit, welches eine hohe Wärmeableitung im oberen Bereich der Standrohre 2, 3 ermöglicht, wobei alle Bedienelemente 21, 40 flexibel in einem oberen Bereich 16 der Standrohre 2 und 3 angeordnet werden können.

In allen Ausgestaltungen kann wenigstens ein Sperrventil 24 oder 25 und/oder wenigstens ein Drosselventil 13 oder 14 elektrisch oder magnetisch betätigbar oder aktivierbar sein. Insbesondere ist auch eine fernsteuerbare Ausführung möglich und bevorzugt. Möglich ist z. B.eine Betätigung vom Lenker aus. Bevorzugt ist auch eine mechanische Fernsteuerung.

Weiterhin befinden sich auch die Drosselventile 13, 14, 22 - 25 im oberen Bereich 16 der Standrohre 2 oder 3 und es kann über einen gemeinsamen an der Gabelkrone 27 oder an dem Standrohr 2, 3 vorgesehenen Einstellhebel 40 sowohl ein Zugstufen-Lockout (gesperrtes Zugstufen-Sperrventil) als auch ein Druckstufen-Lockout (gesperrtes Druckstufen-Sperrventil) eingestellt werden, sodass die Gabel 1 sowohl in Einfederrichtung als auch in Ausfederrichtung starr wird. Gleichzeitig kann auch bei aktiviertem Zugstufen-Lockout über ein Überströmventil 45 eine Dämpfungsfunktion gewährleistet werden.

### Bezugszeichenliste:

- 1: Federgabel
- 2: Standrohr
- 3: Standrohr
- 4: Tauchrohr
- 5: Tauchrohr
- 6: Radaufnahmeraum
- 7: Verbindungsteil
- 8: Dämpfungssystem
- 9: beweglicher Kolben
- 10: Dämpfungskammer
- 11: erste Kammer
- 12: zweite Kammer
- 13: Drosselventil
- 14: Drosselventil
- 15: Steuerabschnitt
- 16: oberes Ende
- 17: unteres Ende
- 18: Ausfallende
- 19: Ausfallende
- 20: Kolbenstange
- 21: Einstellelement
- 22: High-Speed-Drosselventil
- 23: High-Speed-Drosselventil
- 24: Sperrventil
- 25: Sperrventil
- 26: Gabelschaft
- 27: Gabelkrone
- 29: Hochdruckkammer
- 30: Innenkammer
- 31: Außenkammer
- 32: Niederdruckkammer
- 33: Steigleitung
- 34: Steigleitung
- 35: Rückkanal
- 36: unterer Bereich
- 37: Zwischenrohr
- 38: Zwischenraum
- 39: Wandung
- 40: Einstellteil
- 41: erste Drehposition
- 42: zweite Drehposition
- 43: dritte Drehposition
- 44: vierte Drehposition
- 45: Überströmöffnung
- 46: Abstand
- 47: Länge
- 48: Blowoff-Ventil
- 49: Dichtung
- 50: Federsystem
- 51: Rückschlagventil
- 52: Rückschlagventil
- 53: Kolbenführung
- 54: radiale Bohrung
- 55: radiale Bohrung
- 56: Verbindungsbügel
- 57: Drosseleinrichtung
- 58: Drosseleinrichtung
- 59: Feder
- 60: Kanal
- 61: Öffnung
- 62: Ringspalt
- 63: Strömungsdrossel
- 64: Strömungsquerschnitt
- 65: Innenrohr
- 66: Mittelrohr
- 68: Dämpferstellung
- 69: Regelspalt
- 70: Gummischlauch
- 71: O-Ring
- 72: Ölausgleichsraum
- 73: Steuerstift
- 74: Feder
- 75: Steuerstift
- 76: Steuerstift
- 77: Dichtung
- 78: Öffnung
- 79: Gasvolumen

## Patentansprüche

1. Federgabel (1) für ein Fahrrad, umfassend wenigstens ein Standrohr (2, 3) und wenigstens ein damit zusammenwirkendes Tauchrohr (4, 5) und einen Radaufnahmeraum (6) daneben, sowie ein Dämpfungssystem (8) mit einer durch einen beweglichen Kolben (9) in eine erste Kammer (11) und in eine zweite Kammer (12) geteilten Dämpfungskammer (10), wobei wenigstens eine Drosseleinrichtung (13) für die Zugstufe
und wenigstens eine Drosseleinrichtung (14) für die Druckstufe vorgesehen sind,
wobei wenigstens ein Sperrventil (24) zur wahlweisen Sperrung der Zugstufe vorgesehen ist,
**dadurch gekennzeichnet,**
**dass** die Dämpfungskammer (10) wenigstens einen Verbindungskanal (60) mit einer Strömungsdrossel (63) aufweist, welche die zweite Kammer mit der ersten Kammer außerhalb des Kolbens (9) verbindet, wenn das Standrohr (2, 3) und das damit zusammenwirkende Tauchrohr (4, 5) um mehr als einen vorgegebenen Abstand (46) eingefedert sind, um bei stärkerem Einfedern und aktiviertem Sperrventil (24) der Zugstufe ein langsames Ausfedern bis zu einer durch den vorgegebenen Abstand (46) definierten Dämpferstellung (68) zu ermöglichen.

2. Federgabel (1) nach Anspruch 2, wobei das Verhältnis des Strömungsquerschnitts (64) der Strömungsdrossel (63) zu dem maximalen Strömungsquerschnitt der Drosseleinrichtung (58) für die Druckstufe kleiner als 1:5 und insbesondere kleiner als 1:10 und besonders bevorzugt kleiner als 1:20 beträgt.

3. Federgabel (1) nach mindestens einem der vorhergehenden Ansprüche, wobei wenigstens eine Drosseleinrichtung (14) ein einstellbares Drosselventil (13, 14) und insbesondere ein Low-Speed-Drosselventil ist.

4. Federgabel (1) nach mindestens einem der vorhergehenden Ansprüche, wobei für die Zugstufendämpfung und/oder für die Druckstufendämpfung ein fest eingestelltes High-Speed-Drosselventil vorgesehen ist.

5. Federgabel (1) nach mindestens einem der vorhergehenden Ansprüche, wobei ein Sperrventil (25) für die Druckstufe vorgesehen ist.

6. Federgabel (1) nach mindestens einem der vorhergehenden Ansprüche, wobei der Verbindungskanal (60) wenigstens eine Überströmöffnung (45), einen Kanal oder Ringspalt (62) und eine Öffnung (61) umfasst.

7. Federgabel (1) nach mindestens einem der vorhergehenden Ansprüche, wobei der Kanal oder Ringspalt (62) durch ein Innenrohr (65) und ein Mittelrohr (66) begrenzt wird, welches innerhalb des Standrohres (2, 3) angeordnet ist.

8. Federgabel (1) nach mindestens einem der vorhergehenden Ansprüche, wobei der Verbindungskanal (60) wenigstens in einer Richtung absperrbar ist.

9. Federgabel (10) nach mindestens einem der vorhergehenden Ansprüche, wobei das wenigstens eine Tauchrohr (4, 5) zu dem Standrohr (2, 3) in beliebigen Einfederpositionen unterhalb der durch den vorgegebenen Abstand (46) definierten Dämpferstellung (68) feststellbar ist.

10. Federgabel (1) nach mindestens einem der vorhergehenden Ansprüche, wobei der vorgegebene Abstand (46) zwischen etwa 20 % und 50 % des maximalen Federwegs (47) beträgt.

11. Federgabel (1) nach mindestens einem der vorhergehenden Ansprüche, wobei das Dämpfungssystem (10) einen Steuerabschnitt (15) an einem Standrohr (2, 3) aufweist, wobei der Steuerabschnitt (15) oberhalb der ersten Kammer (11) und die erste Kammer (11) oberhalb der zweiten Kammer (12) angeordnet ist.

12. Federgabel (1) nach mindestens einem der vorhergehenden Ansprüche, wobei ein gemeinsames Einstellteil (40) vorgesehen ist, wobei mit dem gemeinsamen Einstellteil (40) das Sperrventil (24) der Zugstufe und das Sperrventil (25) der Druckstufe einstellbar ist.

13. Federgabel (1) nach mindestens einem der vorhergehenden Ansprüche, wobei das Einstellteil (40) an dem Tauchrohr (2, 3) oder der Gabelkrone (27) angeordnet und insbesondere verschwenkbar befestigt ist.

14. Federgabel (1) nach mindestens einem der vorhergehenden Ansprüche, wobei wenigstens ein Sperrventil (24, 25) und/oder wenigstens ein Drosselventil (13, 14) elektrisch oder magnetisch betätigbar und insbesondere fernsteuerbar ist.

15. Federgabel (1) nach mindestens einem der vorhergehenden Ansprüche, wobei die Tauchrohre (3, 4) wenigstens teilweise aus einem Faserverbundwerkstoff und/oder wobei die Standrohre (3, 4) wenigstens teilweise aus Metall bestehen.

## Claims

1. A suspension fork (1) for a bicycle, comprising at least one stanchion tube (2, 3) and at least one slider tube (4, 5) interacting therewith and a wheel receiving space (6) adjacent thereto and a damper system (8) with a damper chamber (10) divided into a first chamber (11) and a second chamber (12) by means of a movable piston (9) wherein at least one damping device (13) for the rebound stage and at least one damping device (14) for the compression stage are provided, wherein at least one shut-off valve (24) for selectively locking the rebound stage is provided,
**characterized in**
**that** the damper chamber (10) comprises at least one connecting duct (60) with a flow damper (63) that connects the second chamber with the first chamber external of the piston (9) when the stanchion tube (2, 3) and the slider tube (4, 5) interacting therewith are compressed by more than a predefined distance (46) such that in the case of a forceful compression and with the shut-off valve (24) of the rebound stage activated, slow decompression is allowed up to a damper position (68) as defined by the predetermined distance (46).

2. The suspension fork (1) according to claim 2 wherein the ratio of the flow cross-section (64) of the flow damper (63) to the maximum flow cross-section of the damping device (58) for the compression stage is smaller than 1:5 and in particular smaller than 1:10 and particularly preferably smaller than 1:20.

3. The suspension fork (1) according to at least one of the preceding claims wherein at least one damping device (14) is an adjustable damper valve (13, 14) and in particular a low-speed damper valve.

4. The suspension fork (1) according to at least one of the preceding claims wherein a fixedly set high-speed damper valve is provided for rebound damping and/or for compression damping.

5. The suspension fork (1) according to at least one of the preceding claims wherein a shut-off valve (25) for the compression stage is provided.

6. The suspension fork (1) according to at least one of the preceding claims wherein the connecting duct (60) comprises at least an overflow aperture (45), a duct or annular gap (62) and an aperture (61).

7. The suspension fork (1) according to at least one of the preceding claims wherein the duct or annular gap (62) is confined by an internal tube (65) and a center tube (66) that is disposed inside the stanchion tube (2, 3).

8. The suspension fork (1) according to at least one of the preceding claims wherein the connecting duct (60) can be shut off at least in one direction.

9. The suspension fork (10) according to at least one of the preceding claims wherein the at least one slider tube (4, 5) is provided to be locked relative to the stanchion tube (2, 3) in any desired compressed position beneath the damper position (68) defined by the predetermined distance (46).

10. The suspension fork (1) according to at least one of the preceding claims wherein the predetermined distance (46) amounts to between approximately 20 % and 50 % of the maximum spring travel (47).

11. The suspension fork (1) according to at least one of the preceding claims wherein the damper system (10) comprises a control section (15) at a stanchion tube (2, 3) wherein the control section (15) is positioned above the first chamber (11) and the first chamber (11), above the second chamber (12).

12. The suspension fork (1) according to at least one of the preceding claims wherein a joint adjusting element (40) is provided wherein by way of the joint adjusting element (40) the shut-off valve (24) of the rebound stage and the shut-off valve (25) of the compression stage is adjustable.

13. The suspension fork (1) according to at least one of the preceding claims wherein the adjusting element (40) is disposed at a stanchion tube (2, 3) or at the fork crown (27) where it is in particular pivotally attached.

14. The suspension fork (1) according to at least one of the preceding claims wherein at least one shut-off valve (24, 25) and/or at least one damper valve (13, 14) may be actuated electrically or magnetically and in particular controlled remotely.

15. The suspension fork (1) according to at least one of the preceding claims wherein the slider tubes (3, 4) consist of a fibrous composite material at least in part and/or wherein the stanchion tubes (3, 4) consist of metal at least in part.

## Revendications

1. Fourche de suspension (1) pour une bicyclette, comprenant au moins un fourreau (2, 3), et au moins un tube plongeur (4, 5) coopérant avec celui-ci et un espace de réception de roue (6) à côté, ainsi qu'un système d'amortissement (8) doté d'une chambre d'amortissement (10) divisée par un piston mobile (9) en une première chambre (11) et en une deuxième chambre (12), au moins un dispositif régulateur (13) étant prévu pour l'action d'extension et au moins un dispositif régulateur (14) pour l'action de compression,
au moins un clapet de retenue (24) étant prévu pour le verrouillage facultatif de l'action d'extension,
**caractérisé en ce**
**que** la chambre d'amortissement (10) présente au moins un canal de raccordement (60) doté d'un régulateur d'échappement (63) qui raccorde la deuxième chambre à la première chambre en dehors du piston (9) lorsque le fourreau (2, 3) et le tube plongeur (4, 5) coopérant avec celui-ci sont enfoncés d'une longueur supérieure à la longueur par défaut (46) afin de permettre, en cas d'enfoncement supérieur et d'activation du clapet de retenue (24) de l'action d'extension, une détente lente jusqu'à une position de débattement (68) définie par la longueur par défaut (46).

2. Fourche de suspension (2) selon la revendication 2, le rapport entre la section d'échappement (64) du régulateur d'échappement (63) et la section d'échappement maximale du dispositif régulateur (58) pour l'action de compression est inférieur à 1:5 et notamment inférieur à 1:10 et plus particulièrement de préférence inférieur à 1:20.

3. Fourche de suspension (1) selon au moins l'une quelconque des revendications précédentes, au moins un dispositif régulateur (14) étant une vanne de régulation réglable (13, 14) et notamment une vanne de régulation pour faible débit.

4. Fourche de suspension (1) selon au moins l'une quelconque des revendications précédentes, une vanne de régulation fixe pour haut débit étant prévue pour l'amortissement de l'action d'extension et/ou pour l'amortissement de l'action de compression.

5. Fourche de suspension (1) selon au moins l'une quelconque des revendications précédentes, un clapet de retenue (25) étant prévu pour l'action de compression.

6. Fourche de suspension (1) selon au moins l'une quelconque des revendications précédentes, le canal de raccordement (60) comprenant au moins un orifice de déversement (45), un canal ou interstice annulaire (62) et un orifice (61).

7. Fourche de suspension (1) selon au moins l'une quelconque des revendications précédentes, le canal ou interstice annulaire (62) étant limité par un tube intérieur (65) et un tube central (66), lequel est agencé l'intérieur du fourreau (2, 3).

8. Fourche de suspension (1) selon au moins l'une quelconque des revendications précédentes, le canal de raccordement (60) pouvant au moins être verrouillé dans un sens.

9. Fourche de suspension (10) selon au moins l'une quelconque des revendications précédentes, le tube plongeur (4, 5) au moins présent pouvant être fixé au fourreau (2, 3) dans des positions d'enfoncement quelconques en-dessous de la position de débattement (68) définie par la longueur par défaut (46).

10. Fourche de suspension (1) selon au moins l'une quelconque des revendications précédentes, la longueur par défaut (46) mesurant entre 20 % et 50 % de la course élastique maximale (47).

11. Fourche de suspension (1) selon au moins l'une quelconque des revendications précédentes, le système d'amortissement (10) présentant une section de commande (15) sur un fourreau (2, 3), la section de commande (15) étant agencée au-dessus de la première chambre (11) et la première chambre (11) au-dessus de la deuxième chambre (12).

12. Fourche de suspension (1) selon au moins l'une quelconque des revendications précédentes, une pièce de réglage commune (40) étant prévue, la pièce de réglage commune (4) permettant de régler le clapet de retenue (24) de l'action d'extension et le clapet de retenue (25) de l'action de compression.

13. Fourche de suspension (1) selon au moins l'une quelconque des revendications précédentes, la pièce de réglage (40) étant agencée sur le tube plongeur (2, 3) ou sur la tête de fourche (27) et étant notamment fixée pivotante.

14. Fourche de suspension (1) selon au moins l'une quelconque des revendications précédentes, au moins un clapet de retenue (24, 25) et/ou au moins une vanne de régulation (13, 14) étant actionné par commande électrique ou magnétique et notamment par commande à distance.

15. Fourche de suspension (1) selon au moins l'une quelconque des revendications précédentes, les tubes plongeurs (3, 4) étant au moins en partie en matériau composite renforcé aux fibres et/ou les fourreaux (3, 4) étant au moins en partie en métal.
